(19) Europäisches Patentamt
European Patent Office
Office européen des brevets

(11) EP 4 749 533 A1

(12) EUROPEAN PATENT APPLICATION

(43) Date of publication:
27.05.2026 Bulletin 2026/22

(51) International Patent Classification (IPC):
$G06N\ 3/096^{(2023.01)}$    $G06N\ 3/0895^{(2023.01)}$
$G06N\ 3/0455^{(2023.01)}$    $G06N\ 3/0442^{(2023.01)}$
$G06N\ 3/0464^{(2023.01)}$

(21) Application number: 25213941.5

(22) Date of filing: 06.11.2025

(52) Cooperative Patent Classification (CPC):
G06N 3/096; G06N 3/045; G06N 3/0455;
G06N 3/049; G06N 3/08; G06N 3/084;
G06N 3/0895; G06N 3/0442; G06N 3/0464

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 21.11.2024 GB 202417111

(71) Applicant: Nokia Technologies Oy
02610 Espoo (FI)

(72) Inventors:
• DAS, Arnav
Seattle (US)
• TANG, Chi Ian
Cambridge (GB)
• MALEKZADEH, Mohammad
Cambridge (GB)

(74) Representative: Nokia EPO representatives
Nokia Technologies Oy
Karakaari 7
02610 Espoo (FI)

(54) **IMU ENCODER**

(57) Example embodiments of the present disclosure relate to an electronic device, a method, apparatus, a computer readable storage medium and a computer program product for an IMU encoder. In the solution, a pre-trained IMU encoder which is determined together with a plurality of modality encoders based on a multi-modality dataset may be obtained. A model output is further determined by inputting a model input into the pre-trained IMU encoder, wherein the model input is indicative of data being derived from one or more IMU sensors. In addition, the model output can be provided to a downstream task. As such, a plurality of modality encoders may be used for determining the pre-trained IMU encoder, thus multiple learning objectives may be incorporated in the pre-training process.

FIG. 4

EP 4 749 533 A1

## Description

### FIELD

Various example embodiments relate to the field of computing science and in particular, to an electronic device, a method, a computer readable storage medium and a computer program product for pre-training and using an inertial measurement unit (IMU) encoder.

### BACKGROUND

Wearable devices can be equipped/embedded with Inertial Measurement Unit (IMU) sensors, including accelerometers, gyroscopes and magnetometers, which track the movement, acceleration, and orientation of the human body. IMU data provides valuable insights into human physical and emotional behaviors, playing a crucial role in health monitoring and overall well-being. For example, step-counting data from IMU sensors was shown to be one of the most effective indicators of cognitive impairment progression in elderly individuals. Such potential has motivated the community to collect vast amounts of IMU data in time-series form. However, when modeled using machine learning (ML) methods, obtaining large amounts of labeled IMU data remains a major challenge, because IMU time series are inherently difficult to interpret and annotate, even by experts.

### SUMMARY

In general, example embodiments of the present disclosure provide a solution for pre-training and using an IMU encoder.

In a first aspect, there is provided an electronic device. The electronic device comprises: at least one processor; and at least one memory storing instructions, wherein the instructions when executed by the at least one processor, cause the electronic device at least to: obtain a pre-trained IMU encoder, wherein the pre-trained IMU encoder is determined together with a plurality of modality encoders based on a multi-modality dataset; determine a model output by inputting a model input into the pre-trained IMU encoder, wherein the model input is indicative of data being derived from one or more IMU sensors; and provide the model output to a downstream task.

In a second aspect, there is provided an electronic device. The electronic device comprises: at least one processor; and at least one memory storing instructions, wherein the instructions when executed by the at least one processor, cause the electronic device at least to: obtain a multi-modality dataset which comprises a plurality of segments, wherein a segment is time-aligned and comprises an IMU data sample and a plurality of modality data samples with a plurality of types; and determine, based on the multi-modality dataset, a pre-trained IMU encoder together with a plurality of modality encoders corresponding to the plurality of modalities.

In a third aspect, there is provided a method. The method comprises: obtaining a pre-trained IMU encoder, wherein the pre-trained IMU encoder is determined together with a plurality of modality encoders based on a multi-modality dataset; determining a model output by inputting a model input into the pre-trained IMU encoder, wherein the model input is indicative of data being derived from one or more IMU sensors; and providing the model output to a downstream task.

In a fourth aspect, there is provided a method. The method comprises: obtaining a multi-modality dataset which comprises a plurality of segments, wherein a segment is time-aligned and comprises an IMU data sample and a plurality of modality data samples with a plurality of types; and determining, based on the multi-modality dataset, a pre-trained IMU encoder together with a plurality of modality encoders corresponding to the plurality of modalities.

In a fifth aspect, there is provided an apparatus. The apparatus comprises: means for obtaining a pre-trained IMU encoder, wherein the pre-trained IMU encoder is determined together with a plurality of modality encoders based on a multi-modality dataset; means for determining a model output by inputting a model input into the pre-trained IMU encoder, wherein the model input is indicative of data being derived from one or more IMU sensors; and means for providing the model output to a downstream task.

In a sixth aspect, there is provided an apparatus. The apparatus comprises: means for obtaining a multi-modality dataset which comprises a plurality of segments, wherein a segment is time-aligned and comprises an IMU data sample and a plurality of modality data samples with a plurality of types; and means for determining, based on the multi-modality dataset, a pre-trained IMU encoder together with a plurality of modality encoders corresponding to the plurality of modalities.

In a seventh aspect, there is an apparatus. The apparatus comprises: obtaining circuitry configured to obtain a pre-trained IMU encoder, wherein the pre-trained IMU encoder is determined together with a plurality of modality encoders based on a multi-modality dataset; determining circuitry configured to determine a model output by inputting a model input into the pre-trained IMU encoder, wherein the model input is indicative of data being derived from one or more IMU sensors; and providing circuitry configured to provide the model output to a downstream task.

In an eighth aspect, there is an apparatus. The apparatus comprises: obtaining circuitry configured to obtain a multi-modality dataset which comprises a plurality of segments, wherein a segment is time-aligned and comprises an IMU data sample and a plurality of modality data samples with a plurality of types; and determining circuitry configured to determine, based on the multi-modality dataset, a pre-trained IMU encoder together with a plurality of modality encoders corresponding to the plurality of modalities.

In a ninth aspect, there is provided a non-transitory computer readable medium comprising program instructions for causing an apparatus to perform at least the method in a third or fourth aspect.

In a tenth aspect, there is provided a computer program comprising instructions, which, when executed by an apparatus, cause the apparatus to perform at least the method in a third or fourth aspect.

It is to be understood that the summary section is not intended to identify key or essential features of embodiments of the present disclosure, nor is it intended to be used to limit the scope of the present disclosure. Other features of the present disclosure will become easily comprehensible through the following description.

## BRIEF DESCRIPTION OF THE DRAWINGS

Some example embodiments will now be described with reference to the accompanying drawings, in which:

FIG. 1 illustrates an example schematic of an environment in which some example embodiments of the present disclosure may be implemented;

FIG. 2 illustrates a flowchart of a method for using the pre-trained IMU encoder in accordance with some example embodiments of the present disclosure;

FIG. 3 illustrates a flowchart of a method for pre-training the IMU encoder in accordance with some example embodiments of the present disclosure;

FIG. 4 illustrates an example architecture for pre-training the IMU encoder in accordance with some example embodiments of the present disclosure;

FIG. 5 illustrates an example architecture of an IMU encoder in accordance with some example embodiments of the present disclosure;

FIG. 6 illustrates an example schematic of a nearest neighbor supervision in accordance with some example embodiments of the present disclosure; and

FIG. 7 illustrates a schematic block diagram of an example device that can be used to implement embodiments of the present disclosure.

Throughout the drawings, the same or similar reference numerals represent the same or similar elements, unless otherwise indicated.

## DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:

(a) hardware-only circuit implementations (such as implementations in only analog and/or digital circuitry);
(b) combinations of hardware circuits and software, such as (as applicable):

(i) a combination of analog and/or digital hardware circuit(s) with software/firmware, and
(ii) any portions of hardware processor(s) with software (including digital signal processor(s)), software, and memory(ies) that work together to cause an apparatus, such as a mobile phone or server, to perform various functions; and

(c) hardware circuit(s) and/or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "electronic device" refers to an apparatus or a server or a system having a capability of computing. The electronic device may include, but not limited to, a portable computer, a desktop computer, laptop-embedded equipment (LEE), laptop-mounted equipment (LME), a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

As mentioned above, obtaining a large amount of labeled IMU data poses a challenge, which may result in difficulties in acquiring a well-trained IMU encoder.

A promising solution for label scarcity is the "pretrain once, adapt many times" approach. This involves initially training an encoder on a large corpus of unlabeled or weakly labeled data. Afterward, a smaller ML model is trained on top of the (typically frozen) encoder for specific tasks, using relatively small amounts of labeled data. While this approach has shown significant success in image, video, audio, and natural language processing, its potential for IMU data remains underexplored, primarily because of challenges in curating large volumes of quality datasets.

Embodiments of the present disclosure provides a solution for training and using an IMU encoder. In the solution, a pre-trained IMU encoder may be obtained and accordingly a model output may be determined based on a model input by using the pre-trained encoder. The pre-trained IMU encoder is determined together with a plurality of modality encoders based on a multi-modality dataset. As such, the pre-trained IMU encoder can be used to determine a quantitative representation of a model input and the representation may be aligned with at least one modality representation.

In the present disclosure, the pre-trained IMU encoder may be determined or generated by a pre-training process, which may also be referred to as a training process or an upstream task. The pre-trained IMU encoder may be further used in one or multiple downstream tasks which may include some model training and/or model inference processes. For example, the downstream tasks may include, but not limited to, classifier, data matching, data analyzer, or the like.

In the present disclosure, a term "representation" is used as an output of an encoder, in some examples, the representation may also be used interchangeably with any one of the following: a latent representation, a feature, an embedding, a vector representation or the like, and the present disclosure does not limit for this aspect.

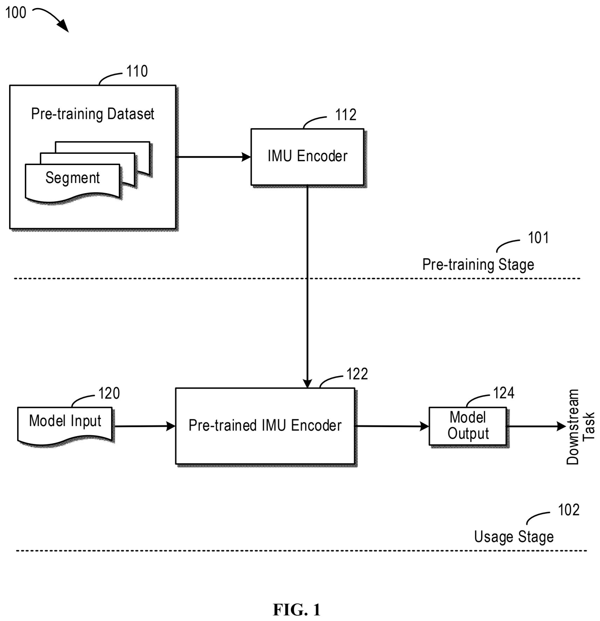

FIG. 1 illustrates an example schematic of an environment 100 in which some example embodiments of the present disclosure may be implemented. As illustrated, the environment 100 includes a pre-training stage 101 and a usage stage 102.

The pre-training stage 101 may be a pre-training process during which the IMU encoder 112 is updated based on a pre-training dataset 110. A pre-trained IMU encoder 122 can be generated or determined after the pre-training stage 101. The pre-training stage 101 may also be referred to as a training stage for the IMU encoder 112 and the present disclosure does not limit for this aspect.

The usage stage 102 may use the pre-trained IMU encoder 122, e.g., to determine a model output 124 based on a model input 120. In addition, the model output 124 or the pre-trained IMU encoder 122 may be used for a downstream task. The usage stage 102 may also be referred to as an inference stage for the pre-trained IMU encoder 122 and the present disclosure does not limit for this aspect.

It should be noted that the pre-training stage 101 and the usage stage 102 may be executed on a same device or different devices. For instance, the pre-training stage 101 may be executed on a first device while the usage stage 102 may be executed on a second device.

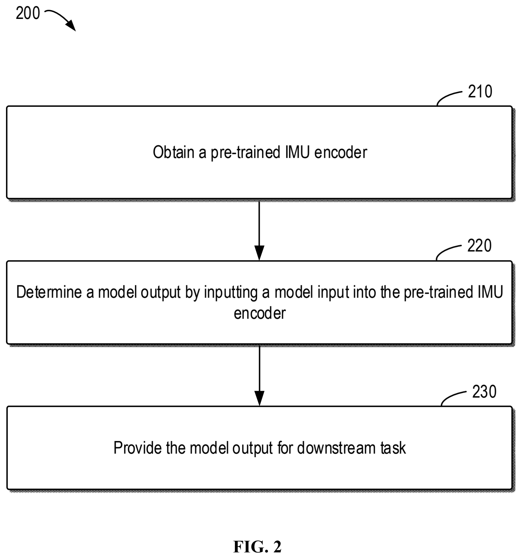

FIG. 2 illustrates a flowchart of a method 200 for using the pre-trained IMU encoder 122 in accordance with some example embodiments of the present disclosure. For ease of description, it is assumed that the method 200 is performed by an electronic device.

At block 210, a pre-trained IMU encoder 122 is obtained. At block 220, a model output 124 is determined by inputting a model input 120 into the pre-trained IMU encoder 122. At block 230, the model output 124 is provided for downstream task.

In some embodiments, the pre-trained IMU encoder 122 may be generated or determined by a different device, and accordingly the electronic device may obtain (or receive or download) the pre-trained IMU encoder 122 from the different device. In some embodiments, the pre-trained IMU encoder 122 may be pre-loaded or be generated or determined by the electronic device, and accordingly the electronic device may obtain (or access) the pre-trained IMU encoder 122 that is stored in a storage of the electronic device. For example, the pre-trained IMU encoder 122 may be determined based on the method 300 described below.

In some embodiments, the pre-trained IMU encoder 122 may include a stacked recurrent neural network (RNN) which comprises at least one of the following: a convolutional layer, a group normalization layer, a max-pooling layer, or a gated recurrent unit (GRU) layer. It should be noted that although the stacked RNN is used in the following embodiments, other model architectures may be used for the pre-trained IMU encoder 122, for example, a transformer may be used for the pre-trained IMU encoder 122, and the present disclosure does not limit for this aspect.

In some embodiments, the pre-trained IMU encoder 122 may have a multimodal head, and an output of the multimodal head is taken as the model output 124.

In some embodiments, the model input 120 may be indicative of data that is derived from one or more IMU sensors. In some examples, an object may comprise or may be equipped with the one or more IMU sensors. For example, the object may include, but not limited to, one or multiple wearable devices, a consumer electronics device, a vehicle, a building, a bridge, an animal, etc. For ease of description, some of the following embodiments are provided with the model input 120 including IMU data that is derived from one or more IMU sensors of at least one wearable device associated with a user. In some examples, the IMU data is in a time-series format. For instance, the IMU data includes data of multivariate IMU time series.

In some embodiments, the model output 124 may be a quantitative representation of the model input 120. In some examples, the quantitative representation may also be referred to as a latent representation, e.g., in a form of vector.

In some embodiments, the downstream task may be a model training task or a model inference task or another task that uses the model output 124. In some examples, the downstream task may include a classifier for determining an effectiveness of the model output 124. For example, a quality of the pre-trained IMU encoder 122 may be evaluated based on the effectiveness of the model output 124 by using the classifier. In some examples, the downstream task may include a matching module for determining a label of the model input 120. For example, the model input and the label may form a pair of samples which may be used for training another model. In some examples, the downstream task may include a training task using the model output 124 to determine status information of a user associated with at least one wearable device that is equipped with the one or more IMU sensors. For example, the model input 120 may include IMU data derived from the one or more IMU sensors of the at least one wearable device, and the model output 124 may be used for determining status information of the user associated with (e.g., wearing) the at least one wearable device. Examples of the at least one wearable device include, but are not limited to, a wrist worn device, a smart ring, smart clothes comprising sensors, and head-worn devices such as headphones, earphones, earbuds, smart glasses, or a headset such as a head-mounted display (HMD).

As discussed, the model output 124 of the pre-trained IMU encoder 122 may be used for variety downstream tasks, thus it is crucial to determine the pre-trained IMU encoder 122.

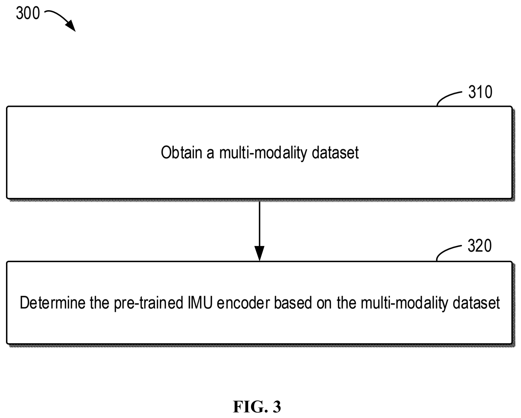

FIG. 3 illustrates a flowchart of a method 300 for pre-training IMU encoder in accordance with some example embodiments of the present disclosure. The method 300 may be performed by an electronic device which may be the same as or different from that which performs the method 200.

At block 310, a multi-modality dataset is obtained. At block 320, the pre-trained IMU encoder is determined based on the multi-modality dataset.

In addition or alternatively, the pre-trained IMU encoder may be stored or be provided for usage.

In some embodiments, the multi-modality dataset may be referred to as the pre-training dataset 110, and the multi-modality dataset may include a plurality of segments. In some examples, a size of the multi-modality dataset may be represented as an integer N, that is, a number of the plurality of segments in the multi-modality dataset is denoted as N.

In some examples, a segment in the multi-modality dataset may include an IMU data sample and a plurality of modality data samples, where different modality data samples may be related with different type. In some examples, a segment may include an IMU data sample, a first modality data sample with a first type, and a second modality data sample with a second type. For instance, the first type may be text, and the first modality data sample with the first type may refer to a text sample. For instance, the second type may be video, and the second modality data sample with the second type may refer to a video sample.

For example, IMU data samples may be derived from head-placed sensors, modality data samples with the first type may be derived from free-form text annotations, and modality data samples with the second type may be derived from egocentric videos. It should be noted that the plurality of modality data samples may further include another modality data sample with another type such as audio, image, or the like, and the present disclosure does not limit for this aspect.

In the present disclosure, the multi-modality dataset may be represented as $\mathcal{D} = \{m_i, v_i, t_i\}_{i=1}^{N}$, where $(m_i, v_i, t_i)$ is any segment (e.g., the i-th segment) in the multi-modality dataset. In some examples, the segment $(m_i, v_i, t_i)$ may be called as a triplet segment that includes three samples that are time-aligned, for example, $m_i, v_i, t_i$ in the i-th segment refer to time-aligned IMU data sample, video sample, and text sample, respectively.

For pre-training the IMU encoder, a plurality of modality encoders corresponding to the plurality of types may be used. For example, the plurality of modality encoders may be open-source pre-trained models that are developed by others. For example, the plurality of modality encoders may include a video encoder and a text encoder, e.g., which may be pre-trained on web-scale data.

In the present disclosure, a multi-objective representation learning strategy may be built, and the multi-objective representation learning strategy combines self-supervision (SS) loss and multi-modal (MM) loss to pre-train the IMU encoder. Optionally, a nearest neighbor (NN) loss may be further combined in some embodiments.

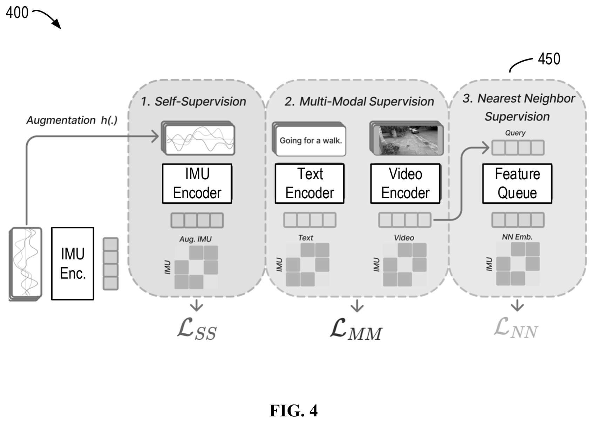

FIG. 4 illustrates an example architecture 400 for pre-training the IMU encoder in accordance with some example embodiments of the present disclosure. As illustrated, a multi-objective pre-training that consists of three loss terms, $L_{SS}$, $L_{MM}$, and $L_{NN}$ is used.

It should be noted that although the nearest neighbor supervision 450 is shown in FIG. 4, the present disclosure does not limit for this aspect, for example, the nearest neighbor supervision 450 may be omitted in some embodiments, and two terms ($L_{SS}$, and $L_{MM}$) are used for pre-training the IMU encoder.

In some examples, the IMU encoder during pre-training may be represented as $\mathfrak{I}$, the video encoder may be represented as V, and the text encoder may be represented as $\mathcal{T}$. For example, the IMU encoder takes an IMU data sample as an input, the video encoder takes a video sample as an input, and the text encoder takes a text sample as an input.

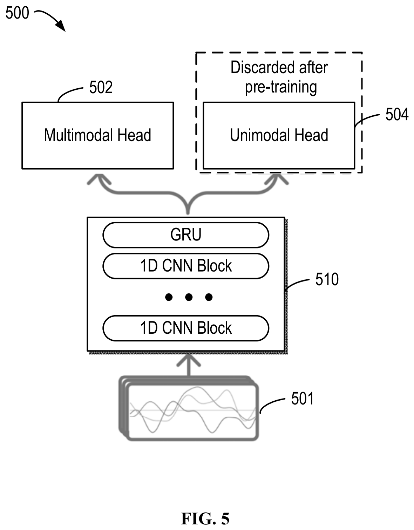

FIG. 5 illustrates an example architecture 500 of an IMU encoder in accordance with some example embodiments of the present disclosure. As illustrated, the backbone 510 of the architecture 500 includes one-dimensional convolutional neural network (1D CNN) and GRU layers. During pre-training, the IMU encoder has two multilayer perception (MLP) heads which include a multimodal head 502 and a unimodal head 504.

As an example, the IMU encoder may be a stacked RNN including a convolutional layer, a group normalization layer, a max-pooling layer, and a GRU layer, with a total of 1.4 million parameters. The unimodal head 504 is used for determining a unimodal self-supervision loss during the pre-training, i.e., $L_{SS}$ shown in FIG. 4.

In some examples, after pre-training, the pre-trained IMU encoder can be used in the method 200, in which the unimodal head 504 is discarded. For example, the model input 120 may be IMU data 501, and accordingly the model output 124 is based on the multimodal head 502. For example, a richer latent representation or a more generalized latent representation may be provided by the multimodal head 502 than that provided by the unimodal head 504.

In some examples, a motivation for this architecture 500 is its efficiency in deployment on a device such as a mobile phone or a wearable device which may be a target platform for collecting IMU data. In some examples, the architecture 500 has shown an effective generalization performance in processing ML tasks on IMU data. However, it should be appreciated that the architecture 500 of the IMU encoder is described only for illustration without any limitation, for instance, a transformer may also be used for the IMU encoder and the present disclosure does not limit for this aspect.

In some embodiments, for pre-training the IMU encoder, a first loss (i.e., $L_{SS}$) may be determined based on a first IMU data sample in the multi-modality dataset and a data augmentation of the first IMU data sample.

In some examples, a first output may be determined by inputting the first IMU data sample into the IMU encoder. For example, if the first IMU data sample is represented as $m_i$, then the first output may be represented as $\mathfrak{T}(m_i)$.

In some examples, a second output may be determined by inputting a data augmentation of the first IMU data sample into the IMU encoder. For example, if the data augmentation of the first IMU data sample is represented as $h(m_i)$, then the second output may be represented as $\mathfrak{T}(h(m_i))$. In some examples, a stochastic transformation module h(.) may be defined for data augmentation. For example, the stochastic transformation module may include a transformation for scaling by a random factor and/or a transformation for reversing the direction of time. It should be noted that some other module may be used for determining the data augmentation of the first IMU data, for example, an augmentation function for adding Gaussian noise may be used, and the present disclosure does not limit for this aspect.

In some examples, the first loss may be determined as the following formula with $\tau$ a learnable temperature parameter:

$$L_{ss} = \sum_{i=1}^{N} \frac{exp(\mathfrak{T}(m_i) \cdot \mathfrak{T}(h(m_i)))^{1/\tau}}{\sum_{k=1}^{N} exp(\mathfrak{T}(m_i) \cdot \mathfrak{T}(h(m_k)))^{1/\tau}}$$

$$(1)$$

According to the first loss, it is encouraged that a representation of an IMU data sample and a representation of a data augmentation of the IMU data sample to be similar.

In some embodiments, for pre-training the IMU encoder, a second loss (i.e., $L_{MM}$) may be determined based on a first IMU data sample and corresponding plurality of modality data samples in a same segment. In a case that there are a plurality of modality data samples with a plurality of types respectively in a segment, the second loss may be a combination of a plurality of sub-losses corresponding to a plurality of types respectively. For example, different sub-losses may be determined based on different modality data samples with different types.

As an examples, for a segment $(m_i, v_i, t_i)$, it includes a first IMU data sample $m_i$, a first modality data sample with a first type $t_i$, and a second modality data sample with a second type $v_i$. A first output may be determined by inputting the first IMU data sample into the IMU encoder, for example, the first output may be represented as $\mathfrak{T}(m_i)$. A third output may be determined by inputting the first modality data sample into a corresponding encoder (a text encoder in this example), for example, the third output may be represented as $\mathcal{T}(t_i)$. A fourth output may be determined by inputting the second modality data sample into a corresponding encoder (a video encoder in this example), for example, the fourth output may be represented as $\mathcal{V}(v_i)$.

In some examples, the first sub-loss corresponding to a first type (text) may be represented as $L_{m2t}$, and a second sub-loss corresponding to a second type (video) may be represented as $L_{m2v}$. In some examples, the second loss may be determined based on the following formulas with $\tau$ a learnable temperature parameter:

$$L_{m2v} = \sum_{i=1}^{N} \frac{exp(\mathfrak{T}(m_i) \cdot \mathcal{V}(v_i))^{1/\tau}}{\sum_{j=1}^{N} exp\big(\mathfrak{T}(m_i) \cdot \mathcal{V}(v_j)\big)^{1/\tau}}$$

$$L_{m2t} = \sum_{i=1}^{N} \frac{exp(\mathfrak{T}(m_i) \cdot \mathcal{T}(t_i))^{1/\tau}}{\sum_{j=1}^{N} exp\big(\mathfrak{T}(m_i) \cdot \mathcal{T}(t_j)\big)^{1/\tau}}$$

$$L_{MM} = L_{m2v} + L_{m2t} \qquad\qquad (2)$$

According to the second loss, the IMU encoder can learn semantic features that are present in rich modalities such as text and video.

In some embodiments, for pre-training the IMU encoder, a third loss (i.e., $L_{NN}$) may be determined based on a first segment and a target feature segment in a feature queue. In some examples, the feature queue may be represented as $Q = \left\{\left(z_j^m, z_j^v, z_j^t\right)\right\}_{j=1}^{K}$ where $z_j^m, z_j^v, z_j^t$ are cached representations of IMU data, video, and text produced from their respective encoders. In some examples, the first segment may be represented as $(m_i, v_i, t_i)$, and the target feature segment may be represented as ( $z_{\eta(i)}^m$, $z_{\eta(i)}^v$, $z_{\eta(i)}^t$ ), where $\eta(i)$ is determined by the following formula:

$$\eta(i) = argmax_{k \in [K]}(z_k^v \cdot \mathcal{V}(v_i)) \qquad (3)$$

For example, the first segment may include a video sample $v_i$, and a video representation ( $\mathcal{V}(v_i)$) may be output by inputting the video sample $v_i$ into the video encoder. For example, the target feature segment ( $z_{\eta(i)}^m$, $z_{\eta(i)}^v$, $z_{\eta(i)}^t$ ) may indicate representations of a target segment which includes a target video, and a target video representation of the target video is $z_j^v$. For example, a similarity between the video sample $v_i$ and the target video can be based on $\mathcal{V}(v_i)$ and $z_j^v$. As such, the video representations are used for determining a target segment (and accordingly a target feature segment). Since the video encoder is pre-trained on a large dataset, the video representations may be stable representations. In addition, the video can capture much more details than text.

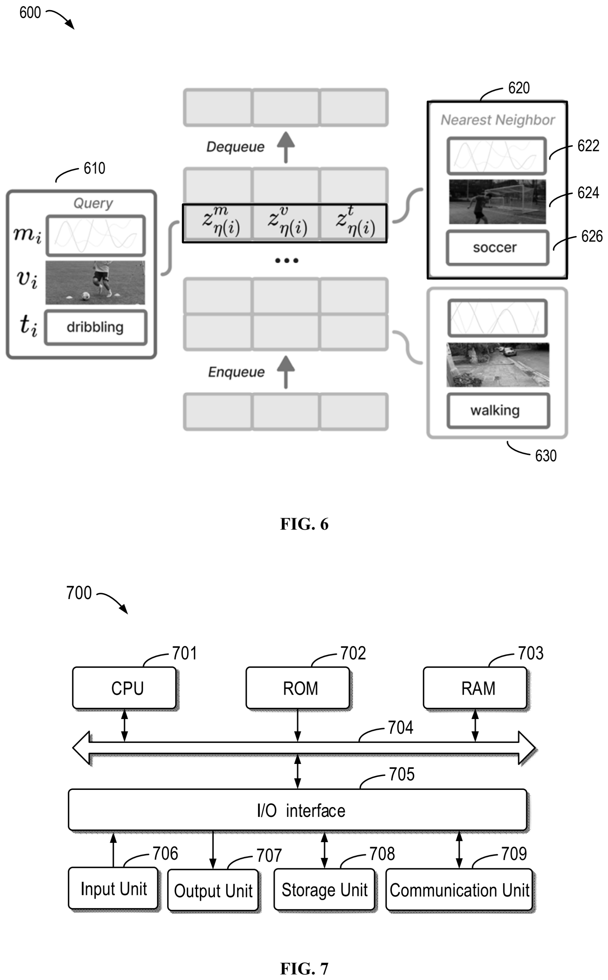

FIG. 6 illustrates an example schematic of a nearest neighbor supervision 600 in accordance with some example embodiments of the present disclosure. As illustrated, the first segment 610 can be a query segment, and a target feature segment ( $z_{\eta(i)}^m$, $z_{\eta(i)}^v$, $z_{\eta(i)}^t$ ) can be retrieved from the feature queue.

In some examples, the target feature segment ( $z_{\eta(i)}^m$, $z_{\eta(i)}^v$, $z_{\eta(i)}^t$ ) may indicate representations of a target segment 620. In some examples, the target feature segment is determined based on a similarity between the video sample ($v_i$) in the first segment 610 and a target video 624 in the target segment 620.

In some examples, a video-to-video similarity may be used for determining the target segment 620. For example, if a similarity between the video sample ($v_i$) and the target video 624 is higher than a similarity between the video sample ($v_i$) and any video of another segment 630, then the target segment 620 including the target video 624 can be determined. In some examples, the target segment 620 may be regarded as a closest segment, a nearest neighbor, a most similar segment, or the like.

In some examples, a text-to-text similarity and/or a IMU-to-IMU similarity may also be used for determining the target segment 620. For example, a similarity between the first segment 610 and the target segment 620 may be determined by some or all of the following: a first similarity between the IMU data sample ($m_i$) and the target IMU data 622, a second similarity between the video sample ($v_i$) and the target video 624, or the third similarity between the text sample ($t_i$) and the target text 626. For instance, a sum of the first similarity, the second similarity, and the third similarity may be taken as the similarity between the first segment 610 and the target segment 620. Likely, a similarity between the first segment 610 and another segment 630 may be determined. If the similarity between the first segment 610 and the target segment 620 is higher than the similarity between the first segment 610 and another segment 630, then the target segment 620 can be determined.

In some examples, the target feature segment may include a plurality of outputs that are determined by inputting respective data in the target segment 620 into a respective encoder, e.g. target IMU data to the IMU encoder, target video data to the video encoder, and target text data to the text encoder.

In some examples, the first segment includes the first IMU data sample $m_i$, and a first output can be determined as $\mathfrak{T}(m_i)$. In some examples, the third loss may be determined on the first output and at least one feature in the target feature segment (i.e., at least one of the plurality of outputs of data in the target segment).

In some examples, the third loss may be determined as the following formula with $\tau$ a learnable temperature parameter:

$$L_{NN} = \sum_{mod \in \{m,v,t\}} \sum_{i=1}^{N} \frac{exp\left(\mathfrak{T}(m_i) \cdot z_{\eta(i)}^{mod}\right)^{1/\tau}}{\sum_{j=1}^{N} exp\left(\mathfrak{T}(m_i) \cdot z_{\eta(j)}^{mod}\right)^{1/\tau}}$$

$$(4)$$

In some embodiments, a total loss may be a weighted sum of the first loss, the second loss, and the third loss, which may be determined by the following formula:

$$L = \alpha L_{SS} + \beta L_{MM} + \gamma L_{NN} \qquad (5)$$

where $\alpha$, $\beta$, and $\gamma$ are weights, and $\alpha + \beta + \gamma = 1$. In some examples, the third loss may be omitted, e.g., $\gamma = 0$. The total loss may also be referred to as a final loss or a multi-objective loss, which can be used for pre-training the IMU encoder.

As mentioned above, a learnable temperature parameter $\tau$ is used in formulas (1), (2), and (4), which may be updated during the pre-training. In some examples, a plurality of trainable parameter including the learnable temperature parameter $\tau$ may be updated by gradient descent according to the total loss, details of which will not be discussed in the present disclosure.

According some embodiments in the present disclosure, multiple learning objectives are incorporated in the pre-training process. The first loss may ensure that the IMU encoder remains invariant to noise, similar to those that are introduced by slight changes in sensor position or type. The second loss pushes the IMU encoder to generate representations towards aligned text and video representations, allowing the IMU encoder to learn the rich semantic information present in video and/or text modalities. The third loss uses the closest example in the feature queue as positive pairs, enabling the IMU encoder to leverage natural data similarities for more adaptive contrastive learning.

Given the promising use of the synergistic relationship between self-supervised and multimodal learning in the computer vision and natural language processing fields, and with the recent public availability of large multimodal datasets, such as Ego-Exo4D, which includes synchronized video, text, and IMU segments, diverse sources of information may be fully leveraged and an incorporation of multiple learning objectives is explored for pre-training an IMU encoder. In a case that IMU data derived from the one or more IMU sensors of wearable devices are analyzed, ubiquitous and effective health monitoring can be enabled.

In some example embodiments, an apparatus capable of performing the method 200 (for example, an electronic device) may comprise means for performing the respective steps of the method 200. The means may be implemented in any suitable form. For example, the means may be implemented in a circuitry or software module.

In some example embodiments, the apparatus comprises: means for obtaining a pre-trained IMU encoder, wherein the pre-trained IMU encoder is determined together with a plurality of modality encoders based on a multi-modality dataset; means for determining a model output by inputting a model input into the pre-trained IMU encoder, wherein the model input is indicative of data being derived from one or more IMU sensors; and means for providing the model output to a downstream task.

In some example embodiments, the model input comprises IMU data in time-series format, and wherein the model output comprises a quantitative representation of the IMU data.

In some example embodiments, the model output is based on a multimodal head of the pre-trained IMU encoder.

In some example embodiments, an apparatus capable of performing the method 300 (for example, an electronic device) may comprise means for performing the respective steps of the method 300. The means may be implemented in any suitable form. For example, the means may be implemented in a circuitry or software module.

In some example embodiments, the apparatus comprises: means for obtaining a multi-modality dataset which comprises a plurality of segments, wherein a segment is time-aligned and comprises an IMU data sample and a plurality of modality data samples with a plurality of types; and means for determining, based on the multi-modality dataset, a pre-trained IMU encoder together with a plurality of modality encoders corresponding to the plurality of modalities.

In some example embodiments, the apparatus comprises: means for determining a first loss based on a first IMU data sample in a first segment and a data augmentation of the first IMU data sample; means for determining a second loss based on the first IMU data sample and corresponding plurality of modality data samples in the first segment; and means for determining the pre-trained IMU encoder by training based on the first loss and the second loss.

In some example embodiments, the apparatus comprises: means for determining a first output by inputting the first IMU data sample into an IMU encoder; means for determining a second output by inputting the data augmentation of the first IMU data sample into the IMU encoder; and means for determining the first loss based on the first output and the second output.

In some example embodiments, the apparatus comprises: means for determining the first output by inputting the first IMU data sample into the IMU encoder; means for determining a third output by inputting a first modality data sample with a first type into a modality encoder corresponding to the first type, wherein the first modality data sample with the first type and the first IMU data sample are in the first segment; and means for determining the first sub-loss based on the first output and the third output.

In some example embodiments, the apparatus comprises: means for determining, from a feature queue, the target segment based on a similarity between the first segment and the target segment; means for determining the first output by inputting the first IMU data sample of the first segment into the IMU encoder; means for determining a plurality of outputs by inputting respective data in the target segment into respective encoder; and means for determining the third loss based on the first output and at least one of the plurality of outputs.

In some example embodiments, the data augmentation of the first IMU data sample is based on at least one of: scaling by a random factor; or reversing a direction of time.

In some example embodiments, the second loss is determined based on a plurality of sub-losses, wherein different sub-losses in the plurality of sub-losses are based on different modality data samples with different types.

In some example embodiments, the pre-trained IMU encoder is determined further based on a third loss, wherein the third loss is determined based on the first segment and a target segment in a feature queue.

In some example embodiments, the first segment comprises the first IMU data sample and a second modality data sample with a second type, the target segment comprises target IMU data and target modality data with the second type, and a similarity between the first segment and the target segment comprises: a similarity between the second modality data sample and the target modality data.

In some example embodiments, the pre-trained IMU encoder is determined based on a total loss which is a weighted sum of the first loss, the second loss, and the third loss.

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example, performing such functionality or functionalities may be caused in an apparatus by a processor that executes instructions stored in a memory of the apparatus.

FIG. 7 illustrates a schematic block diagram of an example device 700 for implementing embodiments of the present disclosure. For example, an electronic device discussed above may be implemented by the device 700. As shown therein, the device 700 includes a central processing unit (CPU) 701 which performs various appropriate acts and processing, based on computer program instructions stored in a read-only memory (ROM) 702 or computer program instructions loaded from a storage unit 708 to a random access memory (RAM) 703. The RAM 703 stores therein various programs and data required for operations of the device 700. The CPU 701, the ROM 702 and the RAM 703 are connected via a bus 704 with one another. An input/output (I/O) interface 705 is also connected to the bus 704.

The following components in the device 700 are connected to the I/O interface 705: an input unit 706 such as a keyboard, a mouse and the like; an output unit 707 including various kinds of displays and a loudspeaker, etc.; a storage unit 708 including a magnetic disk, an optical disk, and etc.; a communication unit 709 including a network card, a modem, and a wireless communication transceiver, etc. The communication unit 709 allows the device 700 to exchange information/data with other devices through a computer network such as the Internet and/or various kinds of telecommunications networks. It would be appreciated that, according to the present disclosure, the output unit 707 may be used to display real-time dynamic change information of customer satisfaction, key factor identification information of group users or individual users participating in the satisfaction, optimization strategy information, strategy implementing effect evaluation information, and the like.

The processing unit 701 may be executed by one or more processing circuits. The processing unit 701 may be configured to execute various processes and processing as described above. For example, in some embodiments, the process as described above can be implemented as a computer software program that is tangibly included in a machine readable medium, e.g., the storage unit 708. In some embodiments, part or all of the computer programs may be loaded and/or mounted onto the device 700 via ROM 702 and/or communication unit 709. When the computer program is loaded to the RAM 703 and executed by the CPU 701, one or more steps of the process as described above may be executed.

The present disclosure may be a system, a method and/or a computer program product. The computer program product may include a computer readable storage medium having computer readable program instructions thereon for causing a processor to carry out aspects of the present disclosure.

The computer readable storage medium may be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals sent through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, device (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor unit of a general purpose computer, special purpose computer, or other programmable data processing device to produce a machine, such that the instructions, when executed via the processing unit of the computer or other programmable data processing device, create means for implementing the functions/acts specified in the flowchart and/or block diagram block or blocks. These computer readable program instructions may also be stored in a computer readable storage medium that can direct a computer, a programmable data processing device, and/or other devices to function in a particular manner, such that the computer readable storage medium having instructions stored therein includes an article of manufacture including instructions which implement aspects of the function/act specified in the flowchart and/or block diagram block or blocks.

The computer readable program instructions may also be loaded onto a computer, other programmable data processing device, or other devices to cause a series of operational steps to be performed on the computer, other programmable devices or other device to produce a computer implemented process, such that the instructions which are executed on the computer, other programmable device, or other devices implement the functions/acts specified in the flowchart and/or block diagram block or blocks.

The flowchart and block diagrams illustrate the architecture, functionality, and operation of possible implementations of systems, methods and computer program products according to various embodiments of the present disclosure. In this regard, each block in the flowchart or block diagrams may represent a module, snippet, or portion of code, which includes one or more executable instructions for implementing the specified logical function(s). In some alternative implementations, the functions noted in the block may occur out of the order noted in the figures. For example, two blocks in succession may, in fact, be executed substantially concurrently, or the blocks may sometimes be executed in the reversed order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1.   An apparatus comprising means for:

   obtaining a pre-trained inertial measurement unit (IMU) encoder, wherein the pre-trained IMU encoder is determined together with a plurality of modality encoders based on a multi-modality dataset;
   inputting a model input into the pre-trained IMU encoder to determine a model output, wherein the model input is indicative of data being derived from one or more IMU sensors; and

   providing the model output to a downstream task.

2. The apparatus of claim 1, wherein the model input comprises IMU data in time-series format, and wherein the model output comprises a quantitative representation of the IMU data; and
wherein the model output is based on a multimodal head of the pre-trained IMU encoder.

3. The apparatus of claim 1 or 2, comprising means configured to:

   obtain the multi-modality dataset which comprises a plurality of segments, wherein a segment is time-aligned and comprises an IMU data sample and a plurality of modality data samples having a plurality of types respectively; and

   determine, based on the multi-modality dataset, the pre-trained IMU encoder together with the plurality of modality encoders corresponding to the plurality of modalities.

4. The apparatus of claim 3, comprising means configured to:

   determine a first loss based on a first IMU data sample in a first segment and a data augmentation of the first IMU data sample;
   determine a second loss based on the first IMU data sample and corresponding plurality of modality data samples in the first segment; and
   determine the pre-trained IMU encoder by training based on the first loss and the second loss;
   determine a first output by inputting the first IMU data sample into an IMU encoder;
   determine a second output by inputting the data augmentation of the first IMU data sample into the IMU encoder; and
   determine the first loss based on the first output and the second output.

5. The apparatus of claim 4, wherein the data augmentation of the first IMU data sample is based on at least one of:

   scaling by a random factor; or
   reversing a direction of time.

6. The apparatus of any of claims 4-5, wherein the second loss is a combination of a plurality of sub-losses, wherein a respective sub-loss in the plurality of sub-losses is determined based on a respective modality data sample with a respective type.

7. The apparatus of claim 6, comprising means configured to:

   determine the first output by inputting the first IMU data sample into the IMU encoder;
   determine a third output by inputting a first modality data sample with a first type into a modality encoder corresponding to the first type, wherein the first modality data sample with the first type and the first IMU data sample are in the first segment; and
   based on the first output and the third output, determine a first sub-loss in the plurality of sub-losses;
   wherein the pre-trained IMU encoder is determined further based on a third loss, wherein the third loss is determined based on the first segment and a target segment in a feature queue.

8. The apparatus of claim 7, comprising means configured to:

   based on a similarity between the first segment and the target segment, determine, from the feature queue, the target segment;
   input the first IMU data sample of the first segment into the IMU encoder to determine the first output;
   input respective data in the target segment into a respective encoder to determine a plurality of outputs; and
   based on the first output and at least one of the plurality of outputs, determine the third loss;
   wherein the first segment comprises the first IMU data sample and a second modality data sample with a second type, the target segment comprises target IMU data and target modality data with the second type; and
   wherein the similarity between the first segment and the target segment comprises: a similarity between the second modality data sample and the target modality data.

9. The apparatus of any of claims 7-8, wherein the IMU encoder is trained based on a total loss which is a weighted sum of the first loss, the second loss, and the third loss; and
wherein the downstream task comprises at least one of:

a classifier for determining an effectiveness of the model output,
a matching module for determining a label of the model input, or
a training task using the model output to determine status information of a user associated with at least one wearable device that equipped with the one or more IMU sensors.

10. The apparatus of claim 1, wherein during a pre-training stage, the IMU encoder has a unimodal head and a multimodal head, and after the pre-training stage, the unimodal head is discarded.

11. An apparatus comprising means for:

obtaining a multi-modality dataset which comprises a plurality of segments, wherein a segment is time-aligned and comprises an inertial measurement unit (IMU) data sample and a plurality of modality data samples with a plurality of types; and
determining, based on the multi-modality dataset, a pre-trained IMU encoder together with a plurality of modality encoders corresponding to the plurality of modalities.

12. The apparatus of claim 11, comprising means configured to:

based on a first IMU data sample in a first segment and a data augmentation of the first IMU data sample, determine a first loss;
based on the first IMU data sample and corresponding plurality of modality data samples in the first segment, determine a second loss; and
determine the pre-trained IMU encoder by training based on the first loss and the second loss.

13. The apparatus of claim 12, wherein the pre-trained IMU encoder is determined further based on a third loss, wherein the third loss is determined based on the first segment and a target segment in a feature queue; and
wherein the apparatus further comprises means configured to:

based on a similarity between the first segment and the target segment, determine, from a feature queue, the target segment;
input the first IMU data sample of the first segment into the IMU encoder to determine the first output;
input respective data in the target segment into respective encoder to determine a plurality of outputs; and
based on the first output and at least one of the plurality of outputs, determine the third loss.

14. The apparatus of claim 13, wherein the first segment comprises the first IMU data sample and a second modality data sample with a second type, the target segment comprises target IMU data and target modality data with the second type, and

wherein a similarity between the first segment and the target segment comprises: a similarity between the second modality data sample and the target modality data; and
wherein the pre-trained IMU encoder is determined based on a total loss which is a weighted sum of the first loss, the second loss, and the third loss.

15. A method comprising:
obtaining a multi-modality dataset which comprises a plurality of segments, wherein a segment is time-aligned and comprises an inertial measurement unit (IMU) data sample and a plurality of modality data samples with a plurality of types; and
determining, based on the multi-modality dataset, a pre-trained IMU encoder together with a plurality of modality encoders corresponding to the plurality of modalities.

**FIG. 1**

200

210

Obtain a pre-trained IMU encoder

220

Determine a model output by inputting a model input into the pre-trained IMU encoder

230

Provide the model output for downstream task

**FIG. 2**

300

310

Obtain a multi-modality dataset

320

Determine the pre-trained IMU encoder based on the multi-modality dataset

**FIG. 3**

**FIG. 4**

500

502

Multimodal Head

Discarded after
pre-training

Unimodal Head

504

GRU

1D CNN Block

• • •

1D CNN Block

510

501

**FIG. 5**

600

**FIG. 6**

700

**FIG. 7**

**EUROPEAN SEARCH REPORT**

**Application Number**

EP 25 21 3941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEUNGWHAN MOON ET AL: "IMU2CLIP: Multimodal Contrastive Learning for IMU Motion Sensors from Egocentric Videos and Text", ARXIV.ORG CORNELL UNIVERSITY LIBRARY, 201 OLIN LIBRARY CORNELL UNIVERSITY ITHACA, NY 14853, 26 October 2022 (2022-10-26), XP091354237, * page 1 - page 5 * | 1-15 | INV. G06N3/096 G06N3/0895 G06N3/0455 ADD. G06N3/0442 G06N3/0464 |
| X | SHENGZHONG LIU ET AL: "FOCAL: Contrastive Learning for Multimodal Time-Series Sensing Signals in Factorized Orthogonal Latent Space", ARXIV.ORG CORNELL UNIVERSITY LIBRARY, 201 OLIN LIBRARY CORNELL UNIVERSITY ITHACA, NY 14853, 30 October 2023 (2023-10-30), XP091648413, * Appendix A-G; page 1 - page 9 * | 1-15 | |
| A | DEBIDATTA DWIBEDI ET AL: "With a Little Help from My Friends: Nearest-Neighbor Contrastive Learning of Visual Representations", ARXIV.ORG CORNELL UNIVERSITY LIBRARY, 201 OLIN LIBRARY CORNELL UNIVERSITY ITHACA, NY 14853, 7 October 2021 (2021-10-07), XP091065743, * the whole document * | 1-15 | **TECHNICAL FIELDS SEARCHED (IPC)**<br><br>G06N |

The present search report has been drawn up for all claims

| Place of search | Date of completion of the search | Examiner |
|---|---|---|
| The Hague | 27 March 2026 | Cilia, Elisa |

EPO FORM 1503 03.82 (P04C01)